# FASCICULE DE BREVET EUROPEEN

(11) **EP 1 420 333 B1**
(45) Date de publication et mention de la délivrance du brevet: **10.05.2006**
(21) Numéro de dépôt: 03292771.7
(22) Date de dépôt: 05.11.2003
(51) Int. Cl.: G06F 3/033, G06F 3/023

(54) **Dispositif à commande tactile permettant de régler un paramètre ayant des valeurs dont les variations sont continues**
Berührungssteuereinrichtung zur Steuerung eines Parameters mit kontinuierlich variablen Werten
Touch control device for controlling a parameter with continuously variable values

(30) Priorité: 13.11.2002 FR 0214184
(43) Date de publication de la demande: 19.05.2004
(73) Titulaire: Peugeot Citroen Automobiles SA, 92200 Neuilly sur Seine (FR)
(72) Inventeur: Tamain, Jacques, 91940 Les Ulis (FR); Chiariglione, Emmanuel, 92600 Asnieres (FR)
(74) Mandataire: Thinat, Michel

(56) Documents cités:
- EP-A- 0 961 199
- DE-A- 19 753 742
- US-A- 5 241 308
- US-A- 5 952 998
- US-A1- 2001 035 860

## Description

La présente invention concerne d'une manière générale un dispositif à commande tactile permettant de régler un paramètre ayant des valeurs dont les variations sont continues et devant être appliqué à un moyen commandé.

Elle s'applique en particulier, mais de manière non limitative, à un véhicule automobile comportant le moyen commandé pouvant être constitué, par exemple, par un autoradio dont le volume sonore constitue le paramètre continu à régler, une climatisation dont la température de réglage constitue le paramètre continu à régler, l'éclairage interne de l'habitacle du véhicule ou des afficheurs de la planche de bord du véhicule et dont l'intensité lumineuse constitue le paramètre continu à régler, le dispositif de régulation de vitesse du véhicule dont la vitesse constitue le paramètre continu à régler, etc...

Les moyens de réglage ou de contrôle de paramètres continus existant actuellement dans le milieu automobile, mais également dans d'autres domaines, tels que l'électroménager, les multimédias, la haute fidélité, sont essentiellement des éléments de commande mécanique, tels que des potentiomètres, des tirettes et / ou des molettes.

Ce type de commande présente un certain nombre d'inconvénients liés à leur nature mécanique, à savoir l'usure des pièces, l'encombrement de la commande, l'encrassement et la difficulté de nettoyage ainsi que la stabilité de fonctionnement de cette commande.

En outre, ces commandes ne sont limitées qu'à un seul mode de fonctionnement comprenant l'incrémentation ou la décrémentation du paramètre continu à régler selon un pas défini. Il n'est donc pas possible à une personne d'atteindre directement une valeur de réglage souhaitée puisqu'elle est obligée d'actionner la commande depuis la valeur initiale jusqu'à la valeur souhaitée en passant par toutes les valeurs intermédiaires.

Des commandes tactiles sont utilisées depuis longtemps pour éliminer les inconvénients des commandes mécaniques ci-dessus.

Parmi ces commandes tactiles, on connaît la commande du type "touch-pad" apparue dans le milieu informatique pour remplacer la souris sur les ordinateurs portables. Ce type de commande commence à faire son apparition dans le domaine de l'automobile, par exemple dans le concept de voiture "SPIRIT" de Siemens. Cette technologie, peu encombrante, permet de déplacer un pointeur virtuel sur un continuum, mais ne permet pas d'atteindre une valeur souhaitée directement, par simple pointage.

Le document EP 0961199 décrit un système de pointage détectant des déplacements du doigt sur un écran tactile élémentaire.

En tant qu'autre commande tactile, on connaît également l'écran tactile. Cette technologie est déjà intégrée à certains véhicules automobiles de série. Elle permet à la fois de détecter des déplacements et des pointages du doigt du conducteur ou du passager. Par contre, elle est extrêmement encombrante et son coût est encore très élevé. C'est la raison pour laquelle l'écran tactile se destine plutôt à une interface graphique complexe qu'à une simple commande de contrôle.

Les deux technologies susmentionnées ont en outre d'autres contraintes communes :
- les surfaces tactiles peuvent être activées par tout type d'objet autre que le doigt. Cette caractéristique peut être un inconvénient dans un habitacle de véhicule automobile car elle pose le problème des activations involontaires par d'autres objets.
- elles imposent un contact direct entre le doigt d'une personne et la surface tactile. Il est donc impossible de recouvrir la surface tactile d'un revêtement, tel que du cuir, permettant de répondre à des besoins stylistiques internes du véhicule.

La présente invention a pour but d'éliminer les inconvénients ci-dessus des dispositifs connus en proposant un dispositif à commande tactile permettant de régler un paramètre continu s'intégrant notamment à un poste de conduite de véhicule automobile et permettant à un utilisateur de faire varier ce paramètre continu graduellement par un déplacement du doigt sur la surface tactile ou d'entrer directement une valeur de consigne de ce paramètre par simple pointage de son doigt sur la surface tactile. En outre, le dispositif à commande tactile de l'invention est une solution simple et donc optimale en terme de coût, fiable et d'intégration stylistique au véhicule aisée.

A cet effet, l'invention se rapporte à un dispositif à commande tactile permettant de régler un paramètre ayant des valeurs dont les variations sont continues et devant être appliqué à un moyen commandé, le dispositif comprenant des moyens de détection de proximité auxquels sont assignées respectivement des valeurs déterminées du paramètre continu et pouvant être au moins chacun individuellement sélectionné ou activé par le doigt d'un opérateur pour opérer un changement d'état du moyen de détection sélectionné représentatif d'une valeur de paramètre assignée à ce moyen de détection, et qui est caractérisé en ce qu'il comprend au moins trois moyens de détection de proximité regroupés les uns à côté des autres pour créer une surface tactile et un circuit électronique de calcul relié aux moyens de détection de proximité, apte à traduire les changements d'état des moyens de détection de proximité en valeurs de consigne du paramètre continu appliquées au moyen commandé et à effectuer une discrimination entre l'activation d'un seul moyen de détection pour fournir au moyen commandé une valeur de consigne assignée au moyen de détection activé, l'activation simultanée de deux moyens de détection adjacents pour fournir au moyen commandé une valeur de consigne calculée par interpolation entre les valeurs de consigne assignées respectivement aux deux moyens de détection activés simultanément, et l'activation successive d'au moins trois moyens de détection par déplacement du doigt sur la surface tactile pour fournir au moyen commandé une valeur de consigne incrémentée ou décrémentée suivant le sens de déplacement du doigt sur ceux-ci.

Le circuit électronique de calcul est apte à distinguer l'activation successive d'au moins trois moyens de détection de proximité des autres activations en tenant compte des écarts temporels entre activations successives de ces moyens de détection.

De préférence, l'écart temporel entre deux activations successives des moyens de détection de proximité est compris entre 50 ms et 1000 ms.

Le circuit électronique de calcul est apte à fournir au moyen commandé une valeur de consigne incrémentée ou décrémentée suivant un pas d'incrémentation ou de décrémentation fixé, par exemple à 5 %, et à prendre en compte l'ordre d'activation des moyens de détection de proximité pour déterminer le sens de déplacement du doigt sur ces moyens.

Selon une variante de réalisation, le circuit électronique de calcul est apte à prendre en compte les valeurs d'écart temporel entre moyens de détection de proximité successivement activés pour calculer une valeur moyenne d'écart temporel représentative d'une vitesse rapide ou lente de déplacement du doigt sur la surface tactile suivant que cette valeur moyenne est inférieure ou supérieure à une valeur déterminée et à déterminer le nombre total de détecteurs successivement activés représentatif de l'amplitude de déplacement de ce doigt, de façon à augmenter le pas d'incrémentation ou de décrémentation de la valeur de consigne proportionnellement à la vitesse et à l'amplitude de déplacement du doigt sur la surface tactile et inversement.

Avantageusement, la valeur déterminée précitée est de 250 ms.

Les moyens de détection de proximité sont des capteurs capacitifs et sont regroupés en adoptant une configuration linéaire, curviligne ou circulaire.

Le circuit électronique de calcul fournit au moyen commandé une valeur de consigne calculée en effectuant la moyenne des valeurs du paramètre assignées respectivement aux deux moyens de détection activés simultanément.

Le circuit électronique de calcul fournit les valeurs de consigne du paramètre continu à un calculateur intégré à un véhicule automobile et le moyen commandé est un autoradio du véhicule dont le volume sonore constitue le paramètre continu, une climatisation dont la température de réglage constitue le paramètre continu, l'éclairage interne ou des afficheurs internes du véhicule dont l'intensité lumineuse constitue le paramètre continu, un dispositif de régulation de vitesse du véhicule dont la vitesse constitue le paramètre continu, ou autres.

Avantageusement, la surface tactile peut être recouverte d'un revêtement non conducteur, tel que du cuir, une matière plastique ou une matière textile.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 représente un schéma synoptique fonctionnel du dispositif à commande tactile conforme à l'invention ;
- la figure 2 représente le schéma de fonctionnement d'un circuit électronique de calcul du dispositif de l'invention en fonction des différents types d'activation des moyens de détection à capteurs capacitifs de ce dispositif ;
- les figures 3A, 3B ; 4A, 4B ; 5A, 5B représentent des exemples de différentes configurations de la surface tactile à capteurs capacitifs du dispositif de l'invention et leurs applications respectives à des équipements d'un véhicule automobile ; et
- la figure 6 est un chronogramme d'activations successives de capteurs capacitifs.

Le dispositif à commande tactile de l'invention va être décrit en application à un véhicule automobile comportant un équipement notamment intégré à un poste de conduite du véhicule et pouvant être commandé de façon à régler ou contrôler un paramètre continu de celui-ci, c'est-à-dire un paramètre ayant des valeurs dont les variations sont continues, un tel équipement pouvant être constitué par un autoradio dont on veut régler le volume sonore en tant que paramètre continu, une climatisation dont on veut régler la température en tant que paramètre continu, l'éclairage interne de l'habitacle du véhicule ou des afficheurs du poste de conduite et dont on veut régler l'intensité lumineuse en tant que paramètre continu, un système de régulation de la vitesse du véhicule dont on veut régler la vitesse en tant que paramètre continu, etc...

Cependant, ce dispositif peut également être utilisé pour régler des paramètres continus dans d'autres domaines tels que la haute fidélité, l'électroménager, les multimédias.

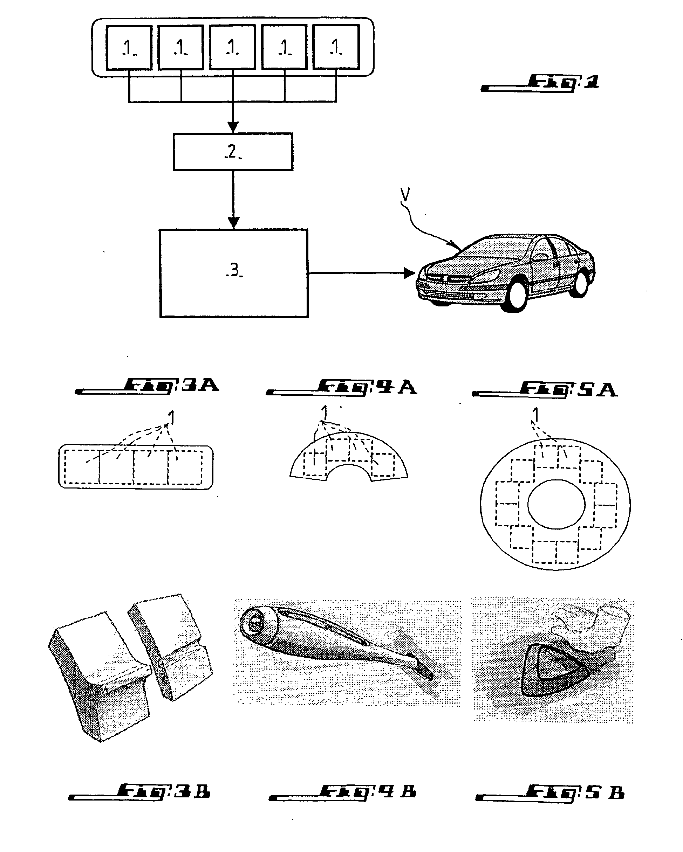

En se reportant à la figure 1, le dispositif à commande tactile de l'invention comprend des moyens de détection de proximité 1 permettant de détecter des différences de capacité entre le doigt d'une personne et chaque moyen 1 et qui sont constitués par des capteurs capacitifs agencés de façon à réaliser une surface tactile. La sensibilité de chaque capteur 1 est réglable et peut être telle qu'elle n'impose pas obligatoirement un contact direct entre le doigt et le capteur. Les capteurs capacitifs 1 sont regroupés les uns à côté des autres pour créer la surface tactile suivant une configuration linéaire ou en barrette. Les capteurs capacitifs 1 représentés sur la figure 1 sont au nombre de cinq, mais leur nombre peut être différent, à condition qu'il y en ai au moins trois.

Les sorties des capteurs capacitifs 1 sont reliées à une interface 2 constituée par un circuit électronique de calcul pouvant traduire les changements d'état des capteurs capacitifs lorsqu'un doigt d'une personne est au moins situé à proximité d'au moins l'un de ceux-ci en valeurs de consigne du paramètre continu appliquées à un calculateur 3 pilotant le moyen commandé présent dans le véhicule automobile V, tel que par exemple l'autoradio de celui-ci.

Le calculateur 3 peut être celui déjà existant sur la plupart des véhicules actuels et le circuit électronique de calcul 2 peut être une interface électronique intégrée à l'ensemble des capteurs capacitifs 1.

Le circuit électronique de calcul 2 est adapté, par une programmation appropriée, à effectuer une discrimination entre les différents modes d'activation des capteurs capacitifs par le conducteur ou un passager du véhicule.

Ces différents modes d'activation sont au nombre de trois.

Le premier mode est celui où seul l'un des capteurs capacitifs 1 est choisi individuellement par le conducteur ou le passager avec pour effet que le paramètre continu est réglé à une valeur qui dépend de l'emplacement du capteur choisi sur la surface tactile.

Le deuxième mode est celui où le doigt du conducteur ou du passager fait intervenir deux capteurs adjacents sur la surface tactile. Dans ce cas, le paramètre continu est réglé à une valeur obtenue par interpolation entre les valeurs de réglage assignées aux deux capteurs adjacents choisis.

Le troisième mode est celui où au moins trois capteurs capacitifs 1 sont successivement activés par déplacement du doigt sur la surface tactile pour obtenir, suivant le sens de déplacement du doigt, une incrémentation ou une décrémentation de la valeur du paramètre continu.

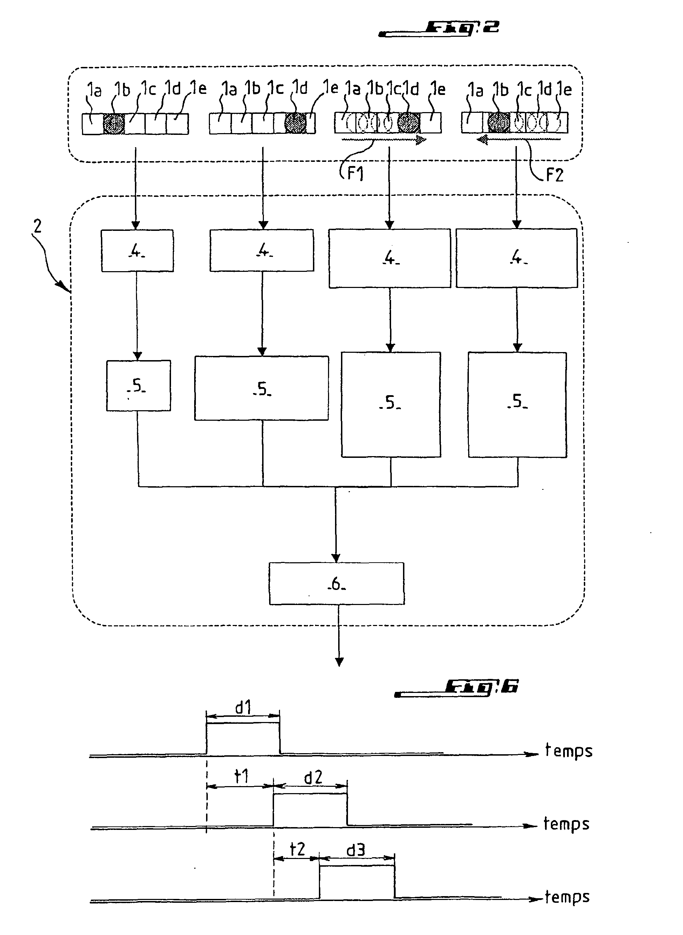

Ces différents modes d'activation des capteurs capacitifs 1 coexistent ainsi sur une même commande tactile et vont être détaillés en référence à la figure 2 dans l'exemple du réglage de l'intensité lumineuse de l'habitacle du véhicule en tant que paramètre continu à régler.

Dans l'exemple représenté à la figure 2, les cinq capteurs capacitifs 1 sont regroupés linéairement et à chaque capteur correspond une valeur de consigne pour régler l'intensité lumineuse devant être appliquée au moyen de commande de l'éclairage piloté par le calculateur 3.

Par exemple, au capteur la est attribuée une valeur de consigne de 0 % de l'intensité lumineuse maximale, c'est-à-dire l'extinction de l'éclairage dans l'habitacle du véhicule, au capteur 1b est attribuée une valeur de consigne de 25 % de cette intensité lumineuse maximale, au capteur 1c est attribuée une valeur de consigne de 50 % de l'intensité lumineuse maximale, au capteur 1d est attribuée une valeur de consigne de 75 % de l'intensité maximale et au capteur 1e est attribuée une valeur de 100 % correspondant à l'intensité lumineuse maximale.

Dans ces conditions, lorsqu'un seul capteur est activé par pointage de celui-ci par un doigt comme cela est le cas du capteur 1b de la surface tactile la plus a gauche en figure 2, un bloc 4 du circuit 2 détermine que le capteur 1b est activé et fournit cette information à un bloc 5 du circuit 2 qui établit une valeur de consigne qui est la valeur correspondant au capteur actif 1b. Dans l'exemple ci-dessus, la valeur de consigne est donc de 25 % de l'intensité lumineuse maximale et elle est transmise au calculateur 3 par l'intermédiaire d'un bloc d'envoi 6 du circuit 2. Le conducteur ou le passager peut donc ainsi régler l'éclairage de l'habitacle à une valeur d'intensité qu'il a choisie par simple pointage du capteur correspondant sur la surface tactile. Si l'on souhaite augmenter la précision des valeurs de consigne de réglage, il suffit alors d'augmenter le nombre de capteurs.

Lorsque deux capteurs contigus sont activés simultanément par un doigt comme cela est le cas pour les capteurs 1d et 1e en figure 2, le bloc 4 détecte ce mode d'activation et l'envoie au bloc 5 qui calcule la valeur de consigne devant être envoyée au calculateur 3 par le bloc d'envoi 6 en effectuant la moyenne des valeurs de capacité assignées respectivement aux deux capteurs activés 1d, 1e. Dans l'exemple ci-dessus, la valeur de consigne sera la moyenne des valeurs de consigne attribuée aux capteurs 1d et 1e, soit 87,5 % de l'intensité lumineuse maximale.

La figure 2 représente également l'activation successivement des capteurs la à 1d par déplacement du doigt sur ou au dessus de la surface tactile dans le sens indiqué par la flèche F1 correspondant à une incrémentation de la valeur de consigne, ainsi que l'activation successivement des capteurs 1e à 1b par le doigt se déplaçant relativement à la surface tactile dans le sens indiqué par la flèche F2 et correspondant à une décrémentation de la valeur de consigne d'intensité lumineuse. On notera que dans ce mode d'activation successive des capteurs par déplacement du doigt relativement à la surface tactile, celle-ci doit être constituée d'au moins trois capteurs capacitifs 1. Le circuit d'interface 2 est adapté pour effectuer une discrimination entre l'activation d'un seul capteur ou l'activation simultanée de deux capteurs adjacents et l'activation de plusieurs capteurs successivement par un déplacement du doigt relativement à ceux-ci. Pour cela, le circuit 2 prend en compte la durée d'activation des capteurs activés et le nombre de capteurs activés. Ainsi, d'une manière générale, pour l'activation de plusieurs capteurs successifs, dans le cas présent quatre, en moins de X ms, le circuit 2 détecte un déplacement du doigt relativement aux capteurs successivement activés alors qu'au contraire pour une activation de un ou deux capteurs dans une période supérieure à X ms, le circuit 2 détecte un pointage direct de ce capteur ou de ces deux capteurs.

Des essais ont été effectués et ont permis d'évaluer approximativement les temps à prendre en compte pour opérer une telle discrimination.

Les résultats obtenus de ces essais vont être commentés en liaison avec la figure 6 qui représente trois capteurs successivement activés.

Ainsi, le déplacement d'un doigt sur la surface tactile se caractérise par l'activation successive des trois capteurs dont les écarts temporels t1 et t2 ont des valeurs comprises entre 50 ms et 1000 ms. La condition permettant d'effectuer une discrimination entre le mode d'activation d'un seul capteur ou de deux capteurs adjacents et le mode d'activation de plusieurs capteurs successifs par déplacement du doigt relativement à ceux-ci est déterminée par les relations selon lesquelles t1 < d1 + 50 ms et t2 < d2 +50 ms où d1 et d2 ainsi que d3 représentent la durée d'activation respectivement des trois capteurs. Ainsi, la détection par le circuit 2 de l'activation d'un seul capteur ou de l'activation simultanée de deux capteurs adjacents s'effectuera à l'instant du relâché par le doigt du ou de ces capteurs plus les 50 ms ou au bout de 1050 ms si à cet instant un autre capteur adjacent n'a pas été activé. On notera que la durée d d'activation de chaque capteur, qui est comprise entre 200 ms et 1000 ms, ne permet pas en tant que telle de discriminer les différents modes d'activation des capteurs.

Le circuit de calcul 2, par ses blocs 4 et 5, est programmé pour déterminer le sens de déplacement du doigt relativement aux capteurs successivement activés.

Deux solutions différentes peuvent alors mises en oeuvre.

La première solution est que le circuit d'interface 2 ne tienne compte que de l'ordre d'activation des capteurs 1 pour déterminer le sens de déplacement du doigt relativement à ceux-ci. Ce circuit transmet ensuite au calculateur 3 un ordre d'incrémentation ou de décrémentation de la valeur de l'intensité lumineuse suivant un pas fixe. Dans le présent exemple, si la valeur initiale de consigne est de 25 % de l'intensité lumineuse maximale et que le pas est fixé par exemple à 5 %, alors la nouvelle valeur de consigne sera de 30 % pour un déplacement du doigt de gauche à droite sur la surface tactile dans le sens indiqué par la flèche F1 et de 25 % pour un déplacement du doigt de droite à gauche dans le sens indiqué par la flèche F2.

La deuxième solution est que le circuit d'interface 2 est adapté pour prendre en compte la vitesse et l'amplitude de déplacement du doigt relativement à la surface tactile pour faire varier le pas d'incrémentation ou de décrémentation. Plus précisément, le circuit 2 peut calculer la rapidité de déplacement du doigt sur les capteurs successivement activés à partir des écarts temporels t1, t2 entre chaque activation de chaque capteur et peut alors distinguer un déplacement rapide d'un déplacement lent du doigt en calculant la durée moyenne des écarts temporels t1, t2. Par exemple, si la durée moyenne de t1 et de t2 est supérieure à 250 ms, le déplacement du doigt relativement à la surface tactile peut être considéré comme lent alors qu'il sera considéré comme rapide en dessous de cette valeur. L'amplitude du déplacement du doigt est caractérisée par le nombre total de capteurs activés et pouvant être facilement déterminé par le circuit 2. De la sorte, la valeur de consigne peut être pondérée en fonction de ces deux critères de vitesse de déplacement du doigt et de son amplitude de déplacement. Par exemple, plus le déplacement est rapide et / ou ample et plus le pas d'incrémentation ou de décrémentation est élevé, et inversement.

Par regroupement des capteurs capacitifs, il est possible de réaliser plusieurs configurations de commandes tactiles pouvant être implantées à des organes de commande appropriés. Ainsi, la figure 3A montre la configuration déjà mentionnée précédemment selon laquelle les capteurs sont regroupés côte à côte suivant une configuration linéaire et la figure 3B montre l'implantation d'une telle commande à une barrette rectiligne solidaire du tableau de bord ou dans une encoche rectiligne de ce tableau de bord. La figure 4A représente les capteurs capacitifs 1 regroupés suivant une configuration curviligne et la figure 4B montre l'implantation d'une telle configuration à une manette de commande du véhicule disposée à proximité du volant de conduite de celui-ci. La figure 5A représente une configuration des capteurs capacitifs 1 selon laquelle la surface tactile est de forme circulaire et la figure 5B représente leur implantation à un bouton de commande par exemple de montée ou de descente des vitres du véhicule.

Quelle que soit leur configuration, les capteurs capacitifs peuvent être revêtus d'un revêtement non conducteur, tel que du cuir, une matière plastique ou une matière textile, afin de faciliter l'intégration du point de vue stylistique de la commande tactile et de valoriser le touché de ces composants.

La combinaison des capteurs capacitifs de façon regroupée permet d'optimiser la commande d'un paramètre continu en terme d'usure, offre une grande liberté de forme de cette commande et favorise son intégration tant du point de vue physique que stylistique sur tout type de support. Le dispositif à commande tactile de l'invention répond à un double besoin de la part des utilisateurs, à savoir pouvoir déplacer un pointeur virtuel sur un continuum afin de maîtriser la vitesse et l'amplitude de déplacement du doigt sur les capteurs, par exemple pour régler le volume sonore de l'autoradio d'un véhicule automobile selon la convenance de l'utilisateur, et pouvoir accéder directement, sans nécessiter de déplacement, à une valeur souhaitée sur ce continuum, pour par exemple régler la température de la climatisation du véhicule à 20°C.

## Revendications

1. Dispositif à commande tactile permettant de régler un paramètre ayant des valeurs dont les variations sont continues et devant être appliqué à un moyen commandé, le dispositif comprenant des moyens de détection de proximité (1) auxquels sont assignées respectivement des valeurs déterminées du paramètre continu et pouvant être au moins chacun individuellement sélectionné ou activé par le doigt d'un opérateur pour opérer un changement d'état du moyen de détection sélectionné (1) représentatif d'une valeur du paramètre assignée à ce moyen de détection, **caractérisé en ce qu'**il comprend au moins trois moyens de détection de proximité (1) regroupés les uns à côté des autres pour créer une surface tactile et un circuit électronique de calcul (2) relié aux moyens de détection de proximité (1), apte à traduire les changements d'état des moyens de détection de proximité en valeurs de consigne du paramètre continu appliquées au moyen commandé et à effectuer une discrimination entre l'activation d'un seul moyen de détection (1) pour fournir une valeur de consigne assignée au détecteur activé, l'activation simultanée de deux moyens de détection adjacents (1) pour fournir une valeur de consigne calculée par interpolation entre les valeurs de consigne assignées respectivement aux deux moyens de détection activés simultanément, et l'activation successive d'au moins trois moyens de détection (1) par déplacement du doigt sur la surface tactile pour fournir au moyen commandé une valeur de consigne incrémentée ou décrémentée suivant le sens de déplacement du doigt sur ceux-ci.

2. Dispositif selon la revendication 1, **caractérisé en ce que** le circuit électronique de calcul (2) est apte à distinguer l'activation successive d'au moins trois moyens de détection de proximité (1a,1b,1c) des autres activations en tenant compte des écarts temporels entre activations successives de ces moyens de détection.

3. Dispositif selon la revendication 2, **caractérisé en ce que** l'écart temporel entre deux activations successives des moyens de détection de proximité est compris entre 50 ms et 1000 ms.

4. Dispositif selon l'une des revendications précédentes, **caractérisé en ce que** le circuit électronique de calcul (2) est apte à fournir au moyen commandé une valeur de consigne incrémentée ou décrémentée suivant un pas d'incrémentation ou de décrémentation fixé, par exemple à 5%, et à prendre en compte l'ordre d'activation des moyens de détection de proximité (1) pour déterminer le sens de déplacement du doigt sur ces moyens.

5. Dispositif selon la revendication 2 ou 3, **caractérisé en ce que** le circuit électronique de calcul (2) est apte à prendre en compte les valeurs d'écarts temporels (t1,t2) entre moyens de détection de proximité successivement activés (1a,1b,1c) pour calculer une valeur moyenne d'écart temporel représentative d'une vitesse rapide ou lente de déplacement du doigt sur la surface tactile suivant que cette valeur moyenne est inférieure ou supérieure à une valeur déterminée et à déterminer le nombre total de moyens de détection successivement activés représentatif de l'amplitude de déplacement de ce doigt, de façon à augmenter le pas d'incrémentation ou de décrémentation de la valeur de consigne proportionnellement à la vitesse et à l'amplitude de déplacement du doigt sur la surface tactile et inversement.

6. Dispositif selon la revendication 5, **caractérisé en ce que** la valeur déterminée est de 250 ms.

7. Dispositif selon l'une des revendications précédentes, **caractérisé en ce que** les moyens de détection de proximité (1) sont des capteurs capacitifs.

8. Dispositif selon l'une des revendications précédentes, **caractérisé en ce que** les moyens de détection de proximité (1) sont regroupés en adoptant une configuration linéaire, curviligne ou circulaire.

9. Dispositif selon l'une des revendications précédentes, **caractérisé en ce que** le circuit électronique de calcul (2) fournit au moyen commandé une valeur de consigne calculée en effectuant la moyenne des valeurs du paramètre assignées respectivement aux deux moyens de détection (1) activés simultanément.

10. Dispositif selon l'une des revendications précédentes, **caractérisé en ce que** le circuit électronique de calcul (2) fournit les valeurs de consigne du paramètre continu à un calculateur (3) intégré à un véhicule automobile et le moyen commandé est un autoradio du véhicule dont le volume sonore constitue le paramètre continu, une climatisation dont la température de réglage constitue le paramètre continu, l'éclairage interne ou des afficheurs internes du véhicule dont l'intensité lumineuse constitue le paramètre continu, un dispositif de régulation de vitesse du véhicule dont la vitesse constitue le paramètre continu, ou autres.

11. Dispositif selon l'une des revendications précédentes, **caractérisé en ce que** la surface tactile est recouverte d'un revêtement non conducteur, tel que du cuir, une matière plastique ou une matière textile.

## Patentansprüche

1. Berührungssteuereinrichtung zum Einstellen eines Parameters mit Werten, deren Variationen kontinuierlich sind, und der auf ein gesteuertes Mittel anzuwenden ist, wobei die Einrichtung Mittel zur Näherungsdetektion (1) umfasst, denen jeweils bestimmte Werte des kontinuierlichen Parameters zugeordnet sind, und die mindestens jeweils einzeln ausgewählt oder mit dem Finger einer Bedienungsperson aktiviert werden können, um eine Zustandsänderung des gewählten Detektionsmittels (1) zu bewirken, die für einen diesem Detektionsmittel zugeordneten Parameterwert typisch ist, **dadurch gekennzeichnet, dass** sie mindestens drei Mittel zur Näherungsdetektion (1), die nebeneinander zusammengefasst sind, um eine Berührungsfläche zu bilden, und eine elektronische Rechenschaltung (2) umfasst, die mit den Mitteln zur Näherungsschaltung (1) verbunden ist und dazu geeignet ist, die Zustandsänderungen der Mittel zur Näherungsdetektion in Sollwerte des kontinuierlichen Parameters, die auf das gesteuerte Mittel angewendet werden, zu übersetzen und eine Unterscheidung zwischen der Aktivierung eines einzelnen Detektionsmittels (1), um einen dem aktivierten Detektor zugeordneten Sollwert zu liefern, der gleichzeitigen Aktivierung von zwei nebeneinander liegender Detektionsmitteln (1), um einen Sollwert abzugeben, der durch Interpolation zwischen den Sollwerten, die jeweils den beiden gleichzeitig aktivierten Detektionsmitteln zugeordnet sind, errechnet wird, und der aufeinander folgenden Aktivierung von mindestens drei Detektionsmitteln (1) durch eine Bewegung des Fingers auf der Berührungsfläche, um dem gesteuerten Mittel einen je nach der Bewegungsrichtung des Fingers darauf erhöhten oder erniedrigten Sollwert zu liefern, durchzuführen.

2. Einrichtung nach Anspruch 1, **dadurch gekennzeichnet, dass** die elektronische Rechenschaltung (2) dazu geeignet ist, die aufeinander folgende Aktivierung von mindestens drei Mitteln zur Näherungsdetektion (1a, 1b, 1c) von den anderen Aktivierungen unter Berücksichtigung der Zeitabweichungen zwischen den aufeinander folgenden Aktivierungen dieser Detektionsmittel zu unterscheiden.

3. Einrichtung nach Anspruch 2, **dadurch gekennzeichnet, dass** die Zeitabweichung zwischen zwei aufeinander folgenden Aktivierungen der Mittel zur Näherungsdetektion zwischen 50 ms und 1000 ms liegt.

4. Einrichtung nach einem der vorhergehenden Ansprüche, **dadurch gekennzeichnet, dass** die elektronische Rechenschaltung (2) dazu geeignet ist, dem gesteuerten Mittel einen je nach einer z.B. auf 5 % festgelegten Erhöhungs- oder Erniedrigungssteigung erhöhten oder erniedrigten Sollwert zu liefern, und die Reihenfolge der Aktivierung der Mittel zur Näherungsdetektion (1) zu berücksichtigen, um die Bewegungsrichtung des Fingers auf diesen Mitteln zu bestimmen.

5. Einrichtung nach Anspruch 2 oder 3, **dadurch gekennzeichnet, dass** die elektronische Rechenschaltung (2) dazu geeignet ist, die Zeitabweichungswerte (t1, t2) zwischen den aufeinander folgend aktivierten Mitteln zur Näherungsdetektion (1a, 1b, 1c) zu berücksichtigen, um einen mittleren Zeitabweichungswert zu berechnen, der für eine schnelle oder langsame Bewegungsgeschwindigkeit des Fingers auf der Berührungsfläche typisch ist, je nachdem ob dieser Mittelwert kleiner oder größer ist als ein bestimmter Wert, und die Gesamtzahl der aufeinander folgend aktivierten Detektionsmittel zu bestimmen, die für die Bewegungsamplitude dieses Fingers typisch ist, um die Erhöhungs- oder Erniedrigungssteigung des Sollwerts proportional zu der Geschwindigkeit und der Bewegungsamplitude des Fingers auf der Berührungsfläche zu erhöhen und umgekehrt.

6. Einrichtung nach Anspruch 5, **dadurch gekennzeichnet, dass** der bestimmte Wert 250 ms beträgt.

7. Einrichtung nach einem der vorhergehenden Ansprüche, **dadurch gekennzeichnet, dass** die Mittel zur Näherungsdetektion (1) kapazitive Sensoren sind.

8. Einrichtung nach einem der vorhergehenden Ansprüche, **dadurch gekennzeichnet, dass** die Mittel zur Näherungsdetektion (1) zusammengefasst sind, indem sie eine lineare, gekrümmte oder kreisförmige Anordnung annehmen.

9. Einrichtung nach einem der vorhergehenden Ansprüche, **dadurch gekennzeichnet, dass** die elektronische Rechenschaltung (2) dem gesteuerten Mittel einen Sollwert liefert, der berechnet wird, indem der Mittelwert der Parameterwerte, die jeweils den beiden gleichzeitig aktivierten Detektionsmitteln (1) zugeordnet sind, gebildet werden.

10. Einrichtung nach einem der vorhergehenden Ansprüche, **dadurch gekennzeichnet, dass** die elektronische Rechenschaltung (2) die Sollwerte des kontinuierlichen Parameters an einen Rechner (3) liefert, der in einem Kraftfahrzeug integriert ist, und das gesteuerte Mittel ein Autoradio des Fahrzeugs, dessen Lautstärke den kontinuierlichen Parameter bildet, eine Klimaanlage, deren Temperatureinstellung den kontinuierlichen Parameter bildet, die Innenbeleuchtung oder Innenanzeigeeinrichtungen des Fahrzeugs, deren Leuchtstärke den kontinuierlichen Parameter bildet, eine Vorrichtung zur Regulierung der Fahrzeuggeschwindigkeit, deren Geschwindigkeit den kontinuierlichen Parameter bildet, usw., ist.

11. Einrichtung nach einem der vorhergehenden Ansprüche, **dadurch gekennzeichnet, dass** die Berührungsfläche mit einer nicht leitenden Verkleidung, wie Leder, Plastik oder Stoff, überzogen ist.

## Claims

1. A touch-sensitive control device for adjusting a parameter that has values that vary continuously and that has to be applied to controlled means, the device comprising proximity sensing means (1) to which respective particular values of the continuous parameter are assigned and at least each of which can be individually selected or activated by the finger of an operator to effect a change of state of the selected sensing means (1) representing a value of the parameter assigned to that sensing means, which device is **characterised in that** it includes at least three proximity sensing means (1) grouped side by side to create a touch-sensitive surface and an electronic computation circuit (2) connected to the proximity sensing means (1) and adapted to translate changes of state of the proximity sensing means into set point values of the continuous parameter applied to the controlled means and to discriminate between activation of a single sensing means (1) to supply a set point value assigned to the activated sensor, simultaneous activation of two adjacent sensing means (1) to supply a set point value computed by interpolation between the set point values respectively assigned to the two sensing means activated simultaneously, and successive activation of at least three sensing means (1) by movement of the finger over the touch-sensitive surface to supply to the controlled means a set point value that is either incremented or decremented, according to the direction of movement of the finger over them.

2. A device according to claim 1, **characterised in that** the electronic computation circuit (2) is adapted to distinguish the successive activation of at least three proximity sensing means (1a, 1b, 1c) from other activations by taking account of the time differences between successive activations of the sensing means.

3. A device according to claim 2, **characterised in that** the time difference between two successive activations of the proximity sensing means is from 50 ms to 1000 ms.

4. A device according to any one of the preceding claims, **characterised in that** the electronic computation circuit (2) is adapted to supply to the control means a set point value that is incremented or decremented by a fixed step, for example 5%, and to take account of the order of activation of the proximity sensing means (1) to determine the direction of movement of the finger over said means.

5. A device according to claim 2 or claim 3, **characterised in that** the electronic computation circuit (2) is adapted to take into account the time difference values (t1, t2) between successively activated proximity sensing means (1a, 1b, 1c) to compute an average time difference value representing a high or low speed of movement of the finger over the touch-sensitive surface according to whether that average value is less than or greater than a particular value and to determine the total number of sensing means activated successively representing the amplitude of movement of the finger so as to increase the increment or decrement step of the set point value in proportion to the speed and amplitude of the movement of the finger over the touch-sensitive surface and vice versa.

6. A device according to claim 5, **characterised in that** the particular value is 250 ms.

7. A device according to any one of the preceding claims, **characterised in that** the proximity sensing means (1) are capacitive sensors.

8. A device according to any one of the preceding claims, **characterised in that** the proximity sensors (1) are grouped into a linear, curvilinear or circular configuration.

9. A device according to any one of the preceding claims, **characterised in that** the electronic computation circuit (2) supplies to the controlled means a set point value computed by averaging the values of the parameter respectively assigned to the two sensing means (1) that are activated simultaneously.

10. A device according to any one of the preceding claims, **characterised in that** the electronic computation circuit (2) supplies the set point values of the continuous parameter to a computer (3) integrated into a motor vehicle and the controlled means consist of a radio of the vehicle the sound volume whereof constitutes the continuous parameter, an air conditioner the temperature setting whereof constitutes the continuous parameter, interior lights or internal displays of the vehicle the brightness whereof constitutes the continuous parameter, a device for regulating the speed of the vehicle the speed whereof constitutes the continuous parameter, etc.

11. A device according to any one of the preceding claims, **characterised in that** the touch sensitive surface is covered with a non-conductive coating such as leather, a plastics material or a textile material.
